# EUROPEAN PATENT APPLICATION

(11) **EP 2 543 286 A1**
(43) Date of publication of application: **09.01.2013**
(21) Application number: 12172034.6
(22) Date of filing: 14.06.2012
(51) Int. Cl.: A47J 27/21

(54) **New magneto-sensitive temperature control device of electric heating container**

(30) Priority: 04.07.2011 CN 201110185707; 16.12.2011 CN 201110426947
(71) Applicant: Chuandong Magnetic Electronic Co., Ltd., Foshan City, Guangdong (CN)
(72) Inventor: Yan, Tao, Yanghe Town Gaoming District Foshan (CN)
(74) Representative: Decamps, Alain René François

(57) **Abstract**

A new magneto-sensitive temperature control device of an electric heating container is disclosed, which includes a new magneto-sensitive steam brake, a magneto-sensitive temperature controller brake device, a lift-up power-off function device and an electric appliance connector. The magneto-sensitive temperature controller brake device is installed on a base of the new magneto-sensitive steam brake. A first spring and a moveable hock of the lift-up power-off function device are installed in a groove on the base of the new magneto-sensitive steam brake. The electric appliance connector includes an upper seat and a lower seat. A central column power-feed terminal and a metal support of the electric appliance connector are installed on the base of the new magneto-sensitive steam brake. The lower seat of the electric appliance connector cooperates with the base of the new magneto-sensitive steam brake, and the lower seat of the electric appliance connector is installed on a power supply base to realize 360-degree rotation connection with a heating container. The present invention can improve the temperature control sensitivity, the temperature control precision and the stability of the heating container.

## Description

### BACKGROUND

### Technical Field

The present invention relates to a magneto-sensitive temperature control device, and in particular to a new magneto-sensitive temperature control device of an electric heating container.

### Related Art

Currently, core technologies of thermal-sensitive controllers that are available in the market, including an air-sensitive actuator and an overheating protection controller, are monopolized by a several foreign companies. Currently, the thermal-sensitive controllers that are available in the market have a bimetallic sheet structure. As the processing precision of the bimetallic material is high and heat treatment conditions are harsh, the passing rate of the product in the production process is low. Bimetal sheets mainly rely on imports, the price is high, the temperature control precision and the corrosion resistance are poor, and the bimetal sheet is easy to get rusty, resulting in failure.

### SUMMARY

The technical problem to be solved by the present invention is to provide a new magneto-sensitive temperature control device of an electric heating container which can improve the temperature control sensitivity, the temperature control precision and the stability of a heating container.

In order to solve the technical problem, the present invention adopts the following technical solution.

A new magneto-sensitive temperature control device of an electric heating container is provided, which includes a new magneto-sensitive steam brake, a magneto-sensitive temperature controller brake device, a lift-up power-off function device, and an electric appliance connector. The new magneto-sensitive steam brake includes a base and a moveable member installed on the base. The base is fixed with a first soft magnet and a second hard magnet, and the second hard magnet is under the first soft magnet. The moveable member is fixed with a first hard magnet, one end of a reed is fixed on the base, and the other end of the reed is fixed on the moveable member. A steam port of the base corresponds to a steam groove or a steam pipe of the heating container. The first soft magnet corresponds to the steam port of the base. The moveable member is connected with a lever, and the lever is connected with a movable contact piece of the heating container to enable the movable contact piece of the heating container to contact with or disconnect a static contact piece of the heating container, so as to switch on and switch off a circuit of the heating container. The magneto-sensitive temperature controller brake device is installed on the base. The lift-up power-off function device includes a first spring, a moveable hock and a mechanism arm. The first spring and the moveable hock are installed in the groove on the base. The moveable hock cooperates closely with the mechanism arm. The electric appliance connector includes an upper seat and a lower seat. The upper seat includes a central column power-feed terminal, an upper seat cylinder-shaped power-feed terminal, an upper seat power-feed spring sheet, an upper casing and a metal support. The upper casing is opened with two annular grooves and two guide grooves. The upper seat cylinder-shaped power-feed terminal passes through one of the guide groove of upper casing and is fixed on the upper casing, and the upper seat power-feed spring sheet passes is in the other guide groove of the upper casing and is fixed on the metal support. The central column power-feed terminal and the metal support are installed on the base. The lower seat cooperates with the base, and the lower seat is installed on a power supply base to realize 360-degree rotation connection with the heating container.

The first soft magnet is made of a temperature-sensitive magnetic material.The first hard magnet and the second hard magnet have the same polarity.

The first hard magnet and the second hard magnet have the opposite polarities.

The magneto-sensitive temperature controller brake device includes an outer casing, a second soft magnet is disposed in the outer casing, and a third hard magnet is disposed below the second soft magnet. A second spring is disposed between the second soft magnet and the third hard magnet, an upper end of the second spring is connected with the second soft magnet, and a lower end of the second spring is connected with the third hard magnet. A thermal conductive outer casing closely contacts an upper part of the second soft magnet. A drag rod extends into the outer casing through a bottom of casing and is fixedly connected to the third hard magnet.

The third hard magnet is a hard magnet with a hole in the center and the drag rod is fixed in the hole of the third hard magnet through connection.

The second soft magnet is made of a temperature-sensitive magnetic material.

The lower seat of the electric appliance connector includes a top cover, a lower seat cylinder-shaped power-feed terminal, a dustproof cover, a dustproof support, a lower casing seat, a reset spring, a lower casing support, a power-feed inserted spring, a lower seat power-feed spring sheet, an annular power-feed contact piece and a power-feed terminal. The lower casing support cooperates with the lower casing seat in a rotation manner. The center of the lower casing support is a central column, and the central column is opened with a support guide groove, and the annular power-feed contact piece fixes the lower seat cylinder-shaped power-feed terminal on the central column of the lower casing support through the support guide groove. The dustproof cover and the dustproof support are fixed together and installed on a top of the reset spring, and move up and down in a gap between the lower casing seat and the lower casing support along with the reset spring. The top cover is fixed on a top of the lower casing support. The power-feed inserted spring of the lower seat, the lower seat power-feed spring sheet, the annular power-feed contact piece and the power-feed terminal are fixed on a bottom of the lower casing support. The annular power-feed contact piece is electrically contacted with the lower seat cylinder-shaped power-feed terminal and the annular power-feed contact piece is electrically contacted with the power-feed terminal. The lower seat power-feed inserted spring cooperates with the central column of the power-feed terminal of the upper seat, a contact point of the upper seat power-feed spring sheet cooperates with the lower seat cylinder-shaped power-feed terminal, and the upper seat cylinder-shaped power-feed terminal cooperates with a contact point of the lower seat power-feed spring sheet.

The center of the lower casing support is a cylinder-shaped central column.

In the present invention, the aforementioned structure is adopted, through the cooperation among the new magneto-sensitive steam brake, the magneto-sensitive temperature controller brake device, the lift-up power-off function device and the electric appliance connector and the cooperation between the soft magnet and the hard magnet, the temperature control sensitivity, the temperature control precision and the stability performance of the heating container are improved.

The features and advantages of the present invention will become much clearer through detail description of the embodiments with reference to the accompanying drawings.

### BRIEF DESCRIPTION OF THE DRAWINGS

FIG. 1 is a schematic structural view of the present invention;
FIG. 2 is a structural view of a base part of a new magneto-sensitive steam brake;
FIG. 3 is a schematic view of an embodiment of a new magneto-sensitive steam brake;
FIG. 4 is a schematic view of a movable contact piece part of a heating container in the part of a new magneto-sensitive steam brake;
FIG. 5 is a schematic structural view of a magneto-sensitive temperature controller brake device;

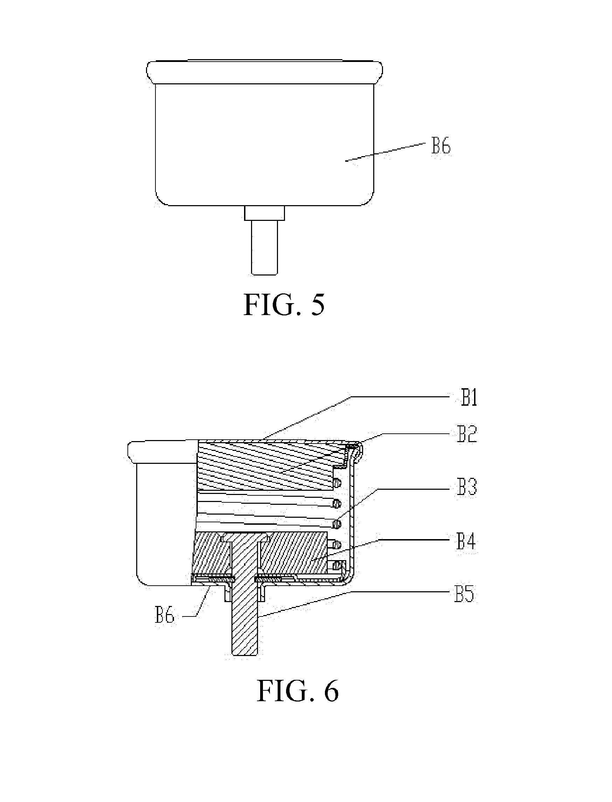

FIG. 5 is a cross-sectional view shown in FIG. 5;

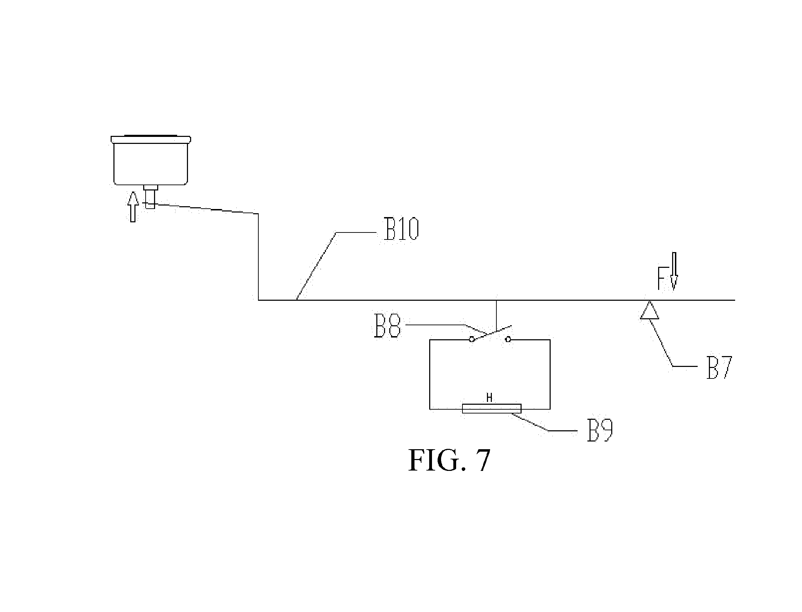

FIG. 7 is a schematic view of the installation of a magneto-sensitive temperature controller brake device;

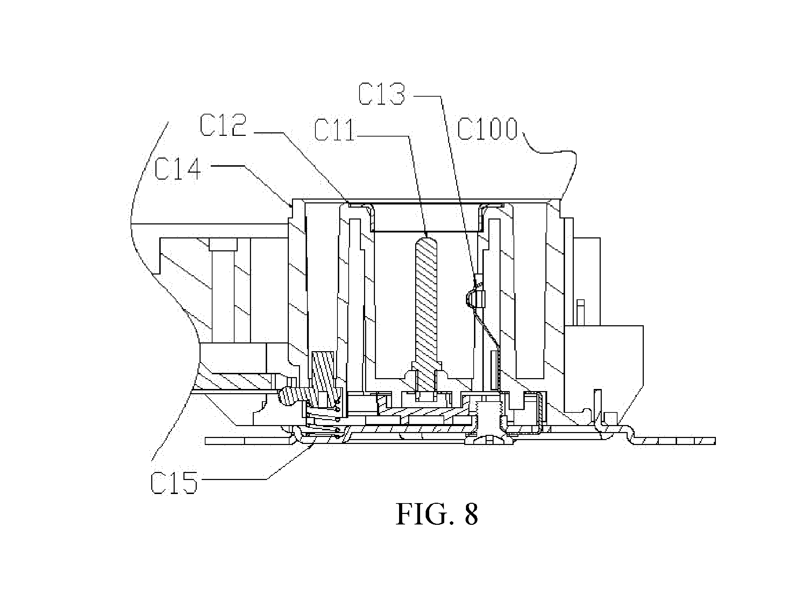

FIG. 8 is a schematic view of an upper seat of an electric appliance connector;

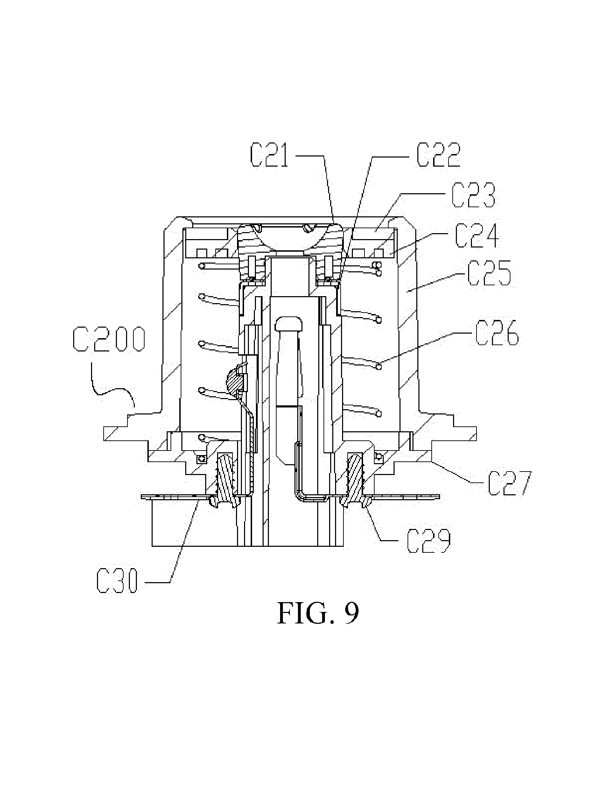

FIG. 9 is a schematic view of a lower seat of an electric appliance connector;

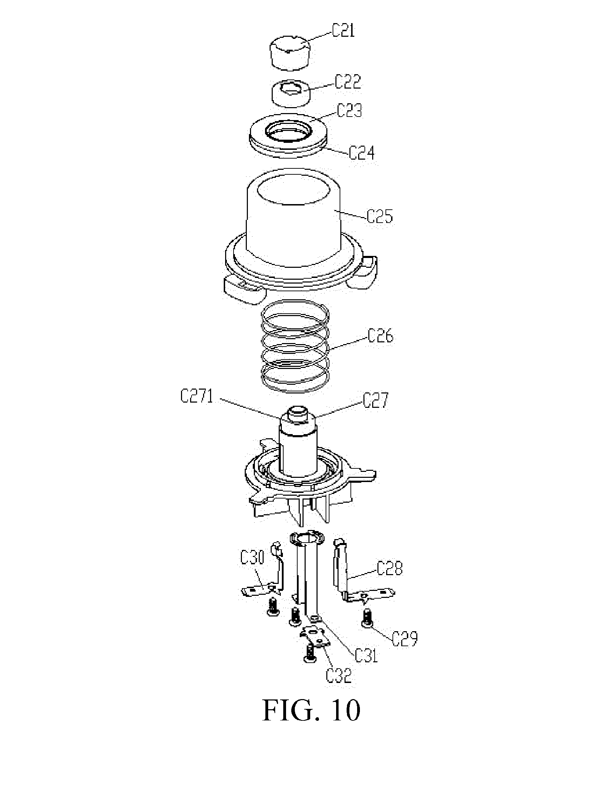

FIG. 10 is an exploded structural view of a lower seat of an electric appliance connector; and

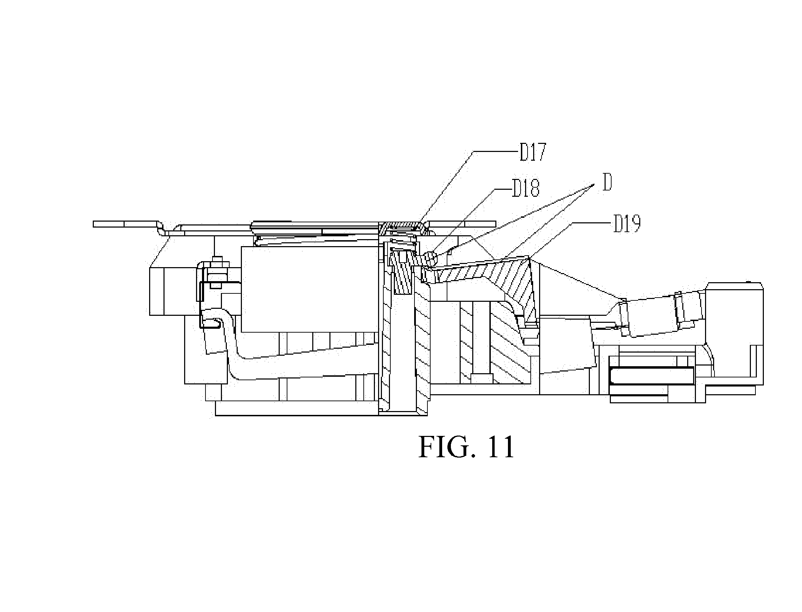

FIG. 11 is a schematic view of a lift-up power-off function device.

### DETAILED DESCRIPTION

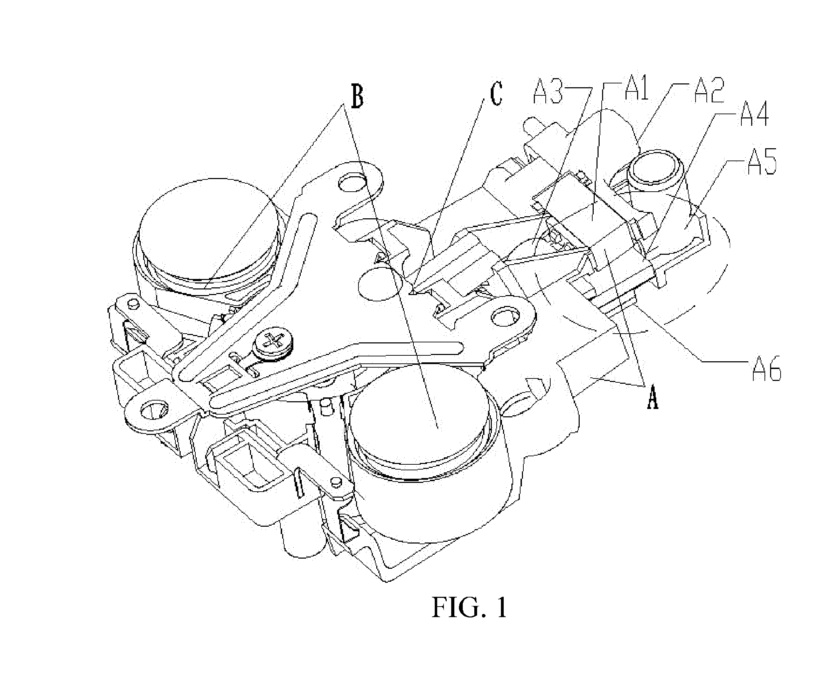

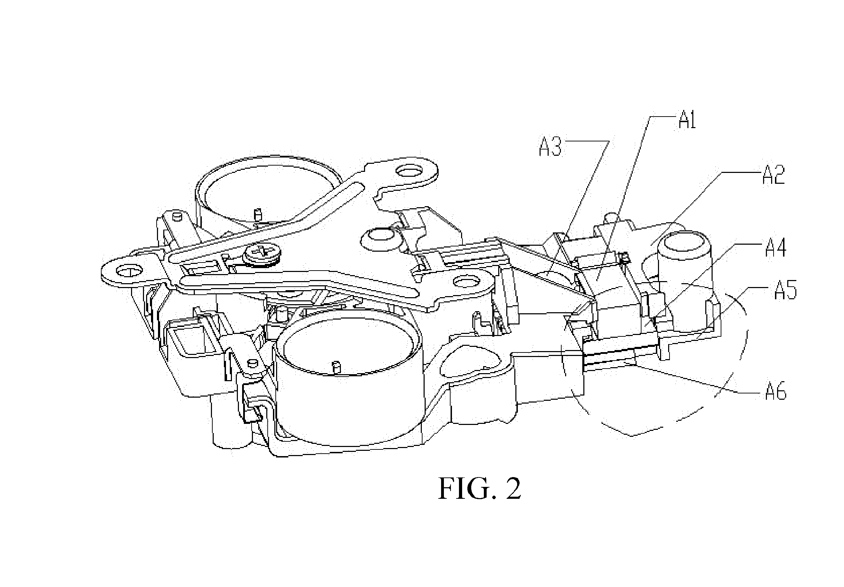

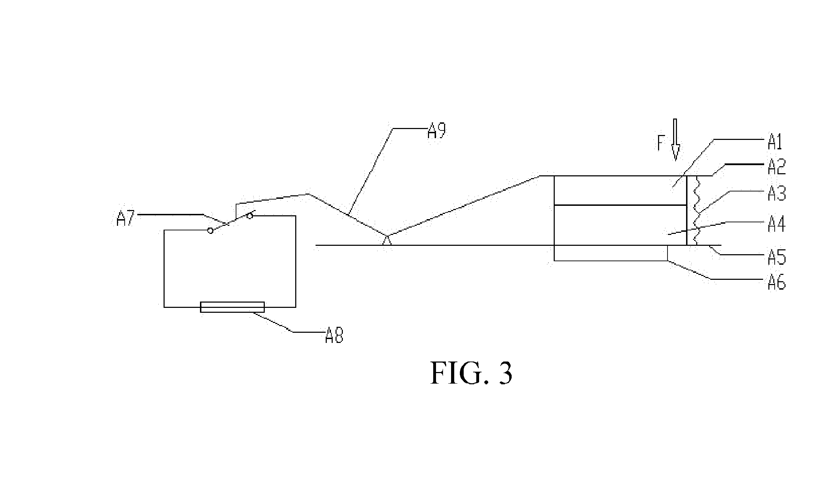

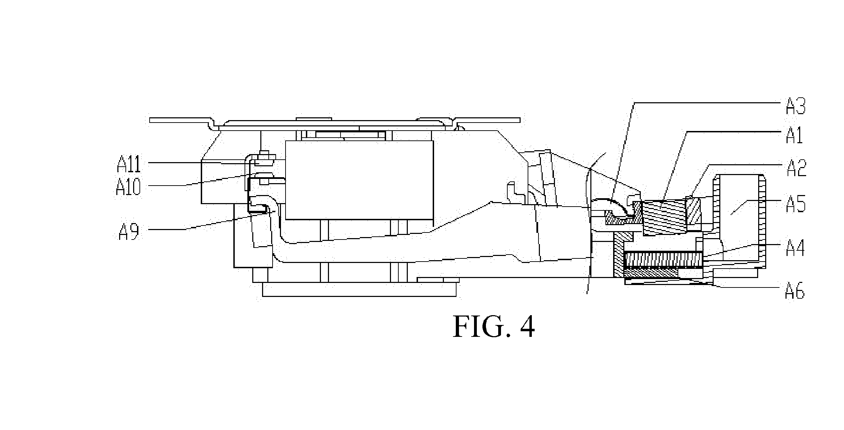

The present invention is described in detail below through an embodiment. However, it should be noted that the protection scope of the present invention is not merely limited herein. Make reference to FIGs. 1 to 11.

A new magneto-sensitive temperature control device of an electric heating container is provided, which includes a new magneto-sensitive steam brake A, magneto-sensitive temperature controller brake device B, a lift-up power-off function device D and an electric appliance connector C. The new magneto-sensitive steam brake A includes a base A5 and a moveable member A2 installed on the base A5. A first soft magnet A4 and a second hard magnet A6 are fixed on the base A5, and the second hard magnet A6 is under the first soft magnet A4. The moveable member A2 is fixed with a first hard magnet A1, one end of a reed A3 is fixed on the base A5, and the other end of the reed A3 is fixed on the moveable member A2. A steam port of the base A5 corresponds to a steam groove or a steam pipe of the heating container. The first soft magnet A4 corresponds to the steam port of the base A5, and the first soft magnet A4 is made of a temperature-sensitive magnetic material. The moveable member A2 is connected with a lever A9, and the lever is connected with a movable contact piece A10 of the heating container to enable the movable contact piece A10 of the heating container to contact with or disconnect a static contact piece A1 of the heating container, so as to switch on and switch off a circuit of the heating container. The magneto-sensitive temperature controller brake device B is installed on the base A5. The lift-up power-off function device D includes a first spring D17, a moveable hock D18 and a mechanism arm D19. The first spring D17 and the moveable hock D18 are installed in the groove on the base A5 and the moveable hock D18 cooperates closely with the mechanism arm D19. The electric appliance connector C includes an upper seat C100 and a lower seat C200. The upper seat C100 includes a central column power-feed terminal C11, an upper seat cylinder-shaped power-feed terminal C12, an upper seat power-feed spring sheet C13, an upper casing C14 and a metal support C15. The upper casing C14 is opened with two annular grooves and two guide grooves. The upper seat cylinder-shaped power-feed terminal C12 passes through one of the guide grooves of the upper casing C14 and is fixed on the upper casing C14, and the upper seat power-feed spring sheet C13 is in the other guide groove of the upper casing C14 and is fixed on the metal support C15. The central column power-feed terminal C11 and the metal support C15 are installed on the base A5. The lower seat C200 cooperates with the base A5 and the lower seat C200 is installed on a power supply base to realize 360-degree rotation connection with the heating container. An attractive force generated between the first hard magnet A1 and the first soft magnet A4 needs to overcome an elastic force of the reed A3, and a switch A6 may be a micro switch.

Polarities of the first hard magnet A1 and the second hard magnet A6 may be the same or opposite. If the first hard magnet A1 and the second hard magnet A6 have has the same polarity, a repulsive force generated between the two magnets and the elastic force generated by the reed A3 may shorten a turn-off time of the new magneto-sensitive steam brake A. If the first hard magnet A1 and the second hard magnet A6 have opposite polarities, a attractive magnetic force generated between the two magnets may shorten a reset time of the new magneto-sensitive steam brake A.

In the magneto-sensitive temperature controller brake device B, the magneto-sensitive temperature controller brake device B includes an outer casing B6, a second soft magnet B2 is disposed in the outer casing B6, and a third hard magnet B4 is disposed below the second soft magnet B2. A second spring B3 is disposed between the second soft magnet B2 and the third hard magnet B4, an upper end of the second spring B3 is connected with a second soft magnet B2, and the other end of the second spring B3 is connected with the third hard magnet B4. A thermal conductive outer casing B1 closely contacts an upper part of the second soft magnet B2. A drag rod B5 extends into the outer casing B6 through a bottom of the outer casing B6 and is fixedly connected with the third hard magnet B4. The third hard magnet B4 is a hard magnet with a hole in the center, and the drag rod B5 extends into the outer casing B6 through the bottom of outer casing B6 and is fixed in the hole of the third hard magnet B4 through connection. The second soft magnet B2 is made of a temperature-sensitive magnetic material. In addition, a power supply switch B8 may be a micro switch.

In the electric appliance connector C, the lower seat C200 of the electric appliance connector C includes a top cover C21, a lower seat cylinder-shaped power-feed terminal C22, a dustproof cover C23, a dustproof support C24, a lower casing seat C25, a reset spring C26, a lower casing support C27, a power-feed inserted spring C28, a lower seat power-feed spring sheet C30, an annular power-feed contact piece C31 and a power-feed terminal C32. The lower casing support C27 cooperates with the lower casing seat C25 in a rotation manner. The center of the lower casing support C27 is a cylinder-shaped central column, the cylinder-shaped central column is opened with a support guide groove C271, and the annular power-feed contact piece C31 fixes a lower seat cylinder-shaped power-feed terminal C22 on the central column of the lower casing support C27 through the support guide groove. The dustproof cover C23 and the dustproof support C24 are fixed together and installed on a top of the reset spring C26 and move up and down in the gap between the lower casing seat C25 and the lower casing support C27 along with the reset spring C26. The top cover C21 is fixed on a top of the lower casing support C27, and the power-feed inserted spring C28, the lower seat power-feed spring sheet C30, the annular power-feed contact piece C31 and the power-feed terminal C32 are fixed on a bottom of the lower casing support C27. The power-feed inserted spring C28 is connected with the L wire or N wire of the power supply, the lower seat power-feed spring sheet C30 is connected with the L wire or N wire of the power supply, and the power-feed terminal C32 is connected with the E wire of the power supply. The annular power-feed contact piece C31 is electrically contacted with the lower seat cylinder-shaped power-feed terminal C22, and the annular power-feed contact piece C31 is electrically contacted with the power-feed terminal C32. The power-feed inserted spring C28 of the lower seat C200 cooperates with the central column power-feed terminal C11 of the upper seat C100. A contact point of the upper seat power-feed spring sheet C13 cooperates with the lower seat cylinder-shaped power-feed terminal C22, and the upper seat cylinder-shaped power-feed terminal C12 cooperates with a contact point of the lower seat power-feed spring sheet C30.

In the lift-up power-off function device D, the lift-up power-off function device D includes a first spring D17, a moveable hock D18 and a mechanism arm D 19. The first spring D17 and the moveable hock D18 are installed in the groove on the base A5, and the moveable hock D18 cooperates closely with the mechanism arm D 19.

The working principle of the embodiment is as follows.

The new magneto-sensitive temperature control device of an electric heating container of this embodiment is fixed on the heating container. The thermal conductive metal outer casing in the magneto-sensitive temperature controller brake device B is in good thermal contact with the heating container. The steam port on the base A5 of the new magneto-sensitive steam brake A corresponds to the steam groove or the steam pipe of the heating container. When an external force is applied, in the new magneto-sensitive steam brake A, the first hard magnet A1 installed in the moveable member A2 and the first soft magnet installed on the base A5 are attracted together, and at the same time, the reed A3, one end of which is fixed on the base A5 and the other end is fixed on the moveable member A2, is compressed. The lever A9 enables the drag rod B5 of the magneto-sensitive temperature controller brake device B to move upward, until the second soft magnet B2 and the third hard magnet B4 in the magneto-sensitive temperature controller brake device B are attracted together, and the second spring B3 in the magneto-sensitive temperature controller brake device B is compressed. In this case, the lever A9 in the moveable member A2 leaves to contact with the movable contact piece A10, and a contact point of the movable contact piece A10 quickly contacts with a contact point on the static contact piece A11 under the elastic deformation of the movable contact piece A10, so that the circuit of the heating container is switched on, and a heating element in the heating container starts to work. After reaching a certain temperature, a liquid in the heating container boils and a large amount of steam is produced. The first soft magnet A4 is heated by the steam that flows through the steam groove or the steam pipe of the heating container and flows out from the steam port. When the first soft magnet A4 is heated to a temperature of the action point (the Curie temperature), the soft magnet looses the magnetic conductivity and the attractive magnetic force. Under the action of the reed A3, the moveable A2 bounces quickly, so that the movable contact piece A10 is quickly separated from the contact point of the static contact piece A11, and the circuit of the heating container is switched off. In addition, when the first hard magnet A1 and the second hard magnet A6 have the same polarity, the repulsive force generated between the two magnets and the elastic force generated by the reed A3 may shorten the turn-off time of the new magneto-sensitive steam brake, and when the first hard magnet A1 and the second hard magnet A6 have the opposite polarities, the attractive magnetic force generated between the two magnets shorten the reset time of the new magneto-sensitive steam brake A.

When the heating container contains little liquid or is empty, if the new magneto-sensitive steam brake A is pressed, as the heating container contains little liquid or is empty, no large amount of steam is generated when the liquid is boiling, resulting in a failure of the new magneto-sensitive steam brake A. The heating element continuously works, and when the second soft magnet B2 in the magneto-sensitive temperature controller brake device B is heated to a certain temperature (the Curie temperature), the second soft magnet B2 looses the magnetic conductivity and the attractive magnetic force. Under the action of the second spring B3 in the magneto-sensitive temperature controller brake device B, the drag rod B5 enables the lever A9 in the moveable member A2 in the new magneto-sensitive steam brake A to move downward, and under the action of the reed A3, the lever A9 enables the moveable contact piece on the base A5 to be quickly separated from the contact point of the static contact piece, so that the circuit of the heating container is switched off and the soft magnet is separated from the hard magnet in the new magneto-sensitive steam brake at the same time.

When the heating container is in junction with a power supply base, the moveable hock D18 in the lift-up power-off function device D contacts the lower seat C100 in the electric appliance connector C on the power supply base. Affected by gravity of the heating container and the liquid, the first spring D17 in the lift-up power-off function device D is compressed, and the moveable hock D18 departs from another lever A9 of the moveable member A2 in the new magneto-sensitive steam brake A. When the new magneto-sensitive steam brake is pressed, the circuit of the temperature control device is switched on. When the heating container departs from the power supply base, an acting force generated by the first spring D17 enables one lever A9 to move downward through the moveable hock D18, so that the first hard magnet A1 is separated from the first soft magnet A4 in the new magneto-sensitive steam brake A, and the circuit of the temperature control device is switched off. Therefore, when the heating container is placed back on the power supply base, and when the liquid in the heating container is heated repeatedly or the heating container contains no liquid, the damage of the electric heating container caused by overheating is prevented. The entire circuit can be switched on and the heating element can work, provided that the new magneto-sensitive steam brake A is pressed again.

Although the embodiment of the present invention has been described with reference to the accompanying drawings, Various transformations or modifications can be made by persons skilled in the art within the scope of present invention, as long as such modifications or replacements do not go beyond the protection scope of present invention, they shall fall within the protection scope of the present invention.

## Claims

1. A magneto-sensitive temperature control device of an electric heating container, comprising: a magneto-sensitive steam brake (A), a magneto-sensitive temperature controller brake device (B), a lift-up power-off function device (D), and an electric appliance connector (C), wherein the new magneto-sensitive steam brake (A) comprises a base (A5) and a moveable member (A2) installed on the base (A5), the base (A5) is fixed with a first soft magnet (A4) and a second hard magnet (A6), the second hard magnet (A6) is under the first soft magnet (A4), the moveable member (A2) is fixed with a first hard magnet (A1) and a reed (A3), one end of the reed (A3) is fixed on the base (A5) and the other end of the reed (A3) is fixed on the moveable member (A2), a steam port of the base (A5) corresponds to a steam groove or a steam pipe of the heating container, the first soft magnet (A4) corresponds to the steam port of the base (A5), and the moveable member (A2) is connected with a lever (A9), the lever (A9) is connected with a movable contact piece (A10) of the heating container to enable the movable contact piece (A10) of the heating container to contact with or disconnect a static contact piece (A11) of the heating container, so as to switch on and switch off a circuit of the heating container; the magneto-sensitive temperature controller brake device (B) is installed on the base (A5); the lift-up power-off function device (D) comprises a first spring (D17), a moveable hock (D18) and a mechanism arm (D19), the first spring (D17) and the moveable hock (D18) are installed in the groove on the base (A5), and the moveable hock (D18) cooperates closely with the mechanism arm (D19); and the electric appliance connector (C) comprises an upper seat (C100) and a lower seat (C200), the upper seat (C100) comprises a central column power-feed terminal (C11), an upper seat cylinder-shaped power-feed terminal (C12), an upper seat power-feed spring sheet (C13), an upper casing (C14) and a metal support (C15), the upper casing (C14) is opened with two annular grooves and two guide grooves, the upper seat cylinder-shaped power-feed terminal (C12) passes through one of the guide grooves of the upper casing (C14) and is fixed on the upper casing (C14), and the upper seat power-feed spring sheet (C13) is in the other guide groove of the upper casing (C14) and is fixed on the metal support (C15), the central column power-feed terminal (C11) and the metal support (C15) are installed on the base (A5), the lower seat (C200) cooperates with the base (A5), and the lower seat (C200) is installed on the power supply base to realize 360-degree rotation connection with the heating container.

2. The magneto-sensitive temperature control device of an electric heating container according to claim 1, wherein the first soft magnet (A4) is made of a temperature-sensitive magnetic material.

3. The magneto-sensitive temperature control device of an electric heating container according to claims 1 or 2, wherein the first hard magnet (A1) and the second hard magnet (A6) have the same polarity.

4. The magneto-sensitive temperature control device of an electric heating container according to claims 1 or 2, wherein the first hard magnet (A1) and the second hard magnet (A6) have opposite polarities.

5. The magneto-sensitive temperature control device of an electric heating container according to any previous claim, wherein the magneto-sensitive temperature controller brake device (B) comprises an outer casing (B6), a second soft magnet (B2) is disposed in the outer casing (B6), a third hard magnet (B4) is disposed below the second soft magnet (B2), a second spring (B3) is disposed between the second soft magnet (B2) and the third hard magnet (B4), an upper end of the second spring (B3) is connected with the second soft magnet (B2), and an lower end of the second spring (B3) is connected with the third hard magnet (B4), a thermal conductive outer casing (B1) closely contacts an upper part of the second soft magnet (B2), and a drag rod (B5) extends into the outer casing (B6) through a bottom of the outer casing (B6) and is fixedly connected to the third hard magnet (B4).

6. The magneto-sensitive temperature control device of an electric heating container according to claim 5, wherein the third hard magnet (B4) is a hard magnet with a hole in the center, and the drag rod (B5) is fixed in the hole of the third hard magnet (B4) through connection.

7. The magneto-sensitive temperature control device of an electric heating container according to claims 5 or 6, wherein the second soft magnet (B2) is made of a temperature-sensitive magnetic material.

8. The magneto-sensitive temperature control device of an electric heating container according to any previous claim, wherein the lower seat (C200) of the electric appliance connector (C) comprises a top cover (C21), a lower seat cylinder-shaped power-feed terminal (C22), a dustproof cover (C23), a dustproof support (C24), a lower casing seat (C25), a reset spring (C26), a lower casing support (C27), a power-feed inserted spring (C28), a lower seat power-feed spring sheet (C30), an annular power-feed contact piece (C31) and a power-feed terminal (C32), the lower casing support (C27) cooperates with the lower casing seat (C25) in a rotation manner, the center of the lower casing support (C27) is a central column opened with a support guide groove (C271), the annular power-feed contact piece (C31) fixes the lower seat cylinder-shaped power-feed terminal (C22) on the central column of the lower casing support (C27) through the support guide groove (C271), the dustproof cover (C23) and the dustproof support (C24) are fixed together and installed on a top of the reset spring (C26) and move up and down in a gap between the lower casing seat (C25) and the lower casing support (C27) along with the reset spring (C26), the top cover (C21) is fixed on a top of the lower casing support (C27), the power-feed inserted spring (C28), the lower seat power-feed spring sheet (C30), the annular power-feed contact piece (C31) and the power-feed terminal (C32) are fixed on a bottom of the lower casing support (C27), the annular power-feed contact piece (C31) is electrically contacted with the lower seat cylinder-shaped power-feed terminal (C22), the annular power-feed contact piece (C31) is electrically contacted with the power-feed terminal (C32), the power-feed inserted spring (C28) of the lower seat (C200) cooperates with the central column power-feed terminal (C11) of the upper seat (C100), a contact point of the upper seat power-feed spring sheet (C13) cooperates with the lower seat cylinder-shaped power-feed terminal (C22), and the upper seat cylinder-shaped power-feed terminal (C12) cooperates with a contact point of the lower seat power-feed spring sheet (C30).

9. The magneto-sensitive temperature control device of an electric heating container according to claim 8, wherein the center of the lower casing support (C27) is a cylinder-shaped central column.
